# EUROPÄISCHE PATENTANMELDUNG

(11) **EP 1 710 065 A2**
(43) Veröffentlichungstag der Anmeldung: **11.10.2006**
(21) Anmeldenummer: 06003095.4
(22) Anmeldetag: 16.02.2006
(51) Int. Cl.: B29B 7/00, B29B 7/36, B29B 7/82, B01F 11/02, B29C 47/00

(54) **Verfahren zur Herstellung von Polymer-Formteilen aus nicht oder nur schlecht miteinander mischbaren Polymeren**

(30) Priorität: 08.04.2005 DE 102005016194
(71) Anmelder: Fraunhofer-Gesellschaft zur Förderung der angewandten Forschung e.V., 80686 München (DE)
(72) Erfinder: GÖTZ, Joachim, 83064 Raubling/Pfraundorf (DE); HÜBNER, Christof, 67500 Marienthal (FR)
(74) Vertreter: Lenz, Steffen

(57) **Zusammenfassung**

Es wird ein Verfahren zur Herstellung eines Polymer-Formteils aus einem ersten Polymer bzw. einem ersten Polymersystem und einem mit dem ersten Polymer nicht oder nur schlecht mischbaren zweiten Polymer bzw. einem zweiten Polymersystem vorgeschlagen, wobei das zweite Polymer in Form einer feinpartikulären dispersen Phase in der kontinuierlichen Phase des ersten Polymers vorliegt. Um für eine feindisperse Verteilung des zweiten Polymers der dispersen Phase in dem ersten Polymer der kontinuierlichen Phase unter zuverlässiger Vermeidung von Aggregationen der dispersen Phase zu sorgen, ist erfindungsgemäß vorgesehen, daß das erste Polymer in flüssigem, plastifiziertem oder gelöstem Zustand mit dem zweiten Polymer in flüssigem, plastifiziertem oder gelöstem Zustand zusammengebracht und letzteres in das erste Polymer feindispers eindispergiert wird, was durch Beaufschlagung mit Ultraschall derart geschieht, daß zumindest in einem der Polymere Kavitationsbläschen erzeugt werden. Anschließend wird die Dispersion zu dem Polymer-Formteil unter Abkühlen oder Aushärten sowohl des die kontinuierliche Phase bildenden ersten Polymers als auch des die disperse Phase bildenden zweiten Polymers erstarrt.

## Beschreibung

Die Erfindung betrifft ein Verfahren zur Herstellung eines Polymer-Formteils aus wenigstens einem ersten Polymer oder Polymersystem und wenigstens einem mit dem ersten Polymer nicht oder nur schlecht mischbaren zweiten Polymer oder Polymersystem, wobei das zweite Polymer in Form einer feinpartikulären dispersen Phase in der kontinuierlichen Phase des ersten Polymers vorliegt.

Werkstoffe auf der Basis von gegebenenfalls mit Verstärkungsfasern oder Füllstoffen versetzten Polymeren, Polymer-Blends, Polymermischungen oder Polymerlösungen, wie wäßrigen Systemen mit Hydrokolloiden/Biopolymeren, z.B. Proteinen, Polysacchariden etc., sind in vielerlei Ausgestaltung bekannt. Im Falle von Polymer-Blends oder Polymermischungen, bei welchen die hierin enthaltenen Polymere weitestgehend ineinander gelöst sind oder zumindest eine einzige, homogene Phase bilden, ist es möglich, durch den Einsatz bestimmter Polymere in bestimmten Mengenanteilen gezielt die für die jeweilige Anwendung eines hieraus erzeugten Polymer-Formteils gewünschten Eigenschaften, wie Festigkeit, Zähigkeit, Reibungskoeffizient etc., hervorzuheben. Darüber hinaus ist es möglich, den Polymeren (bzw. Polymer-Blends oder Polymermischungen) Additive, wie Weichmacher, Antioxidantien, Gleitmittel, Pigmente und Farbstoffe, Stabilisatoren usw., zuzusetzen, um die Eigenschaften der eingesetzten Polymere während der Verarbeitung oder im fertigen Polymer-Formteil zu modifizieren bzw. an den jeweiligen Verwendungszweck anzupassen.

Sowohl bei der Herstellung von Polymer-Formteilen aus mittels thermoplastischer Verarbeitungsverfahren, wie Extrudieren, Strangpressen, Spritzgießen etc., verarbeitbaren thermoplastischen oder thermoelastischen Polymeren als auch aus teilweise oder gänzlich vernetzbaren elastischen oder duroplastischen Polymeren ist die Anwendung von Ultraschall bekannt, um fluide Additive oder Verstärkungsfasern und Füllstoffe möglichst homogen in das plastifizierte bzw. flüssige Polymer einzumischen oder auch die Fließeigenschaften des plastifizierten Polymers in vorteilhafter Weise zu beeinflussen. So beschreibt beispielsweise die DE 100 24 762 A1 ein Verfahren zur Druckförderung gleitfähiger Massen, insbesondere plastifizierter Polymere, wobei in die gleitfähige Masse und/oder in ein dieser zugesetztes Gleitmittel Ultraschallenergie eingekoppelt wird, um den Druckabfall über die Förderstrecke zu vermindern und oberflächennahe Defekte an dem erzeugten Formkörper zu verhindern. Der WO 2004/024 415 A1 ist ein weiteres Verfahren zur Verbesserung der Fließeigenschaften plastifizierter Polymere entnehmbar, indem das plastifizierte Polymer in einer Plastifiziereinheit, wie einer Spritzgießeinrichtung oder einem Extruder, mit Ultraschall beaufschlagt wird. Ferner ist die Anwendung von Ultraschall bekannt, um in ein plastifiziertes Polymer eindispergierte Feinpartikel gleichmäßig zu verteilen und Agglomerationen der Feinpartikel zu verhindern bzw. aufzulösen (WO 03/055 939 A1).

Ferner sind Polymersysteme bekannt, welche aus wenigstens einem ersten Polymer und wenigstens einem mit dem ersten Polymer nicht oder nur schlecht mischbaren zweiten Polymer bestehen und gleichfalls mit Verstärkungsfasern, Füllstoffen und/oder weiteren Additiven versetzt sein können, wobei das zweite Polymer in Form einer feinpartikulären dispersen Phase in der kontinuierlichen Phase des ersten Polymers vorliegt. Auch in diesem Fall wurde beobachtet, daß sich die Materialeigenschaften solcher zwei- oder mehrphasiger Polymersysteme auf diese Weise gezielt modifizieren lassen, wobei es z.B. durch den Zusatz eines gegenüber dem ersten Polymer der kontinuierlichen Phase härteren zweiten Polymers der dispersen Phase möglich ist, die Steifigkeit, die Härte, die Kratzfestigkeit etc. zu verbessern, während z.B. durch den Zusatz eines gegenüber dem ersten Polymer der kontinuierlichen Phase weicheren zweiten Polymers der dispersen Phase die Wärme- und Schalldämmungseigenschaften, die Duktilität etc. verbessert werden kann. Insbesondere ist auf diese Weise auch eine Verbesserung der Schlagzähigkeit möglich, da eine in einer solchen Werkstoffstruktur auftretende Ausbreitung von Rissen durch Reduzierung der Spannung aufgrund der feinpartikulären, weicheren Strukturen gehemmt oder gar gestoppt wird.

Von besonderem Interesse ist in der Regel eine sehr feindisperse Verteilung der dispersen Phase des zweiten Polymers in der kontinuierlichen Phase des ersten Polymers mit einer Teilchengröße der dispersen Phase von z.B. etwa 10 nm bis zu mehreren Millimetern, vorzugsweise bis zu etwa 1000 µm. Zur Herstellung sehr kleiner Polymerpartikel zwischen etwa 10 nm und 1000 nm werden beispielsweise die bekannten Verfahren der Emulsions- und Suspensionspolymerisation, der Plasmapolymerisation, der Verdüsung von niederviskosen Polymerlösungen oder das sogenannte RESS-Verfahren ("Rapid Expansion of Supercritical Solutions") eingesetzt. Ein Problem besteht dabei grundsätzlich in der Handhabung der feinen Partikel, welche zur Agglomeration neigen und darüber hinaus insbesondere aufgrund ihrer Lungengängigkeit im Verdacht stehen, gesundheitsschädlich zu wirken. Überdies besteht bei der Einarbeitung solcher polymeren Feinpartikel in plastifizierte oder flüssige Polymere das Problem, daß häufig aufgrund ihrer Unverträglichkeit miteinander eine nur unzureichende Benetzung der Feinpartikel mit dem Polymer der kontinuierlichen Phase erreicht werden kann, was die Materialeigenschaften des fertigen Polymer-Formteils negativ beeinflußt. Im Falle von plastifizierbaren thermoplastischen oder thermoelastischen Feinpartikeln ergibt sich bei der Einarbeitung in plastifizierte oder flüssige Polymere ein zusätzliches Problem dahingehend, daß die Feinpartikel häufig schmelzen und die schmelzflüssigen Tröpfchen unter Bildung weitaus größerer Tröpfchen zusammenfließen, so daß in dem fertigen Polymer-Formteil keine feindisperse Phasenverteilung mehr vorliegt. Dies um so mehr, als der Schmelzbereich thermoplastischer Polymere mit abnehmender Partikelgröße sich in Richtung geringerer Temperaturen verschiebt. Eine solche Materialkombination macht folglich im Falle von Nanopartikeln, z.B. mit Abmessungen zwischen etwa 10 nm und etwa 1000 nm, eine direkte Herstellung des gewünschten Polymer-Formteils wünschenswert, da ein erneutes Aufschmelzen eines Granulates einen Verlust der Nanoskaligkeit der Nanopartikeln nach sich ziehen würde.

Mit "feinpartikulärer, disperser Phase" bzw. "Feinpartikel" sind im übrigen im Sinne der vorliegenden Erfindung nicht nur im wesentlichen sphärische Partikel mit einer Partikelgröße in dem vorgenannten Intervall, sondern insbesondere auch vornehmlich ein- oder zweidimensionale Strukturen mit beliebigen Abmessungen in einer oder zwei Ebenen angesprochen, welche zumindest in einer weiteren Ebene eine Partikelgröße in dem vorgenannten Intervall, d.h. von etwa 10 nm bis zu mehreren Millimetern, vorzugsweise bis zu etwa 1000 µm, aufweisen. Solche - im wesentlichen eindimensionale - Strukturen können beispielsweise in Form langer, gegebenenfalls verzweigter oder unverzweigter Ketten oder Fäden vorliegen, während solche - im wesentlichen zweidimensionale - Strukturen z.B. in Form eines oder mehrerer, gegebenenfalls materialschlüssig miteinander verbundener, dünner Plättchen (wie es z.B. bei Schichtsilikaten der Fall ist) auftreten können. Bei Porensystemen von porösen Festkörpern können auch beide Phasen als Kontinua oder Quasikontinua vorliegen, wobei beispielsweise die Porendurchmesser im Nanometerbereich von etwa 10 nm bis 1000 nm liegen können.

Der Erfindung liegt die Aufgabe zugrunde, ein Verfahren zur Herstellung eines Polymer-Formteils aus wenigstens einem ersten Polymer bzw. einem ersten Polymersystem und wenigstens einem mit dem ersten Polymer nicht oder nur schlecht mischbaren zweiten Polymer bzw. einem zweiten Polymersystem, wobei das zweite Polymer in Form einer feinpartikulären dispersen Phase in der kontinuierlichen Phase des ersten Polymers vorliegt, dahingehend weiterzuentwickeln, daß unter Vermeidung der oben genannten Nachteile eine sehr feindisperse, möglichst homogene Verteilung des zweiten Polymers in dem ersten Polymer bis zu einer Teilchengröße von wenigen Nanometern erreicht werden kann.

Erfindungsgemäß wird diese Aufgabe mit einem gattungsgemäßen Verfahren gelöst, welches durch die folgenden Schritte gekennzeichnet ist:
- Zusammenbringen des ersten Polymers in flüssigem, plastifiziertem oder gelöstem Zustand mit dem zweiten Polymer in flüssigem, plastifiziertem oder gelöstem Zustand;
- feindisperses Eindispergieren des zweiten Polymers in das erste Polymer durch Beaufschlagung mit Ultraschall derart, daß zumindest in einem der Polymere Kavitationsbläschen erzeugt werden; und
- Erstarren der Dispersion zu dem Polymer-Formteil unter Abkühlen oder Aushärten zumindest eines des die kontinuierliche Phase bildenden ersten Polymers und des die disperse Phase bildenden zweiten Polymers, insbesondere unter Abkühlen oder Aushärten sowohl des die kontinuierliche Phase bildenden ersten Polymers als auch des die disperse Phase bildenden zweiten Polymers.

Die erfindungsgemäße Vorgehensweise gewährleistet eine in situ Bildung von Feinpartikeln aus dem plastifizierten oder flüssigen zweiten Polymer, indem dieses durch die Einkopplung von Ultraschall in Form feinster Tröpfchen, Fäden oder auch zweidimensionaler, z.B. plättchenförmiger Strukturen in das plastifizierte oder flüssige erste Polymer eindispergiert und diese Dispersion sodann unter Abkühlen (im Falle wenigstens eines schmelzbaren, thermoplastischen oder thermoelastischen Polymers) und/oder Aushärten (im Falle wenigstens eines zumindest teilweise vernetzbaren oder aushärtbaren duroplastischen oder elastischen Polymers) der jeweiligen Polymere erstarrt wird. Dabei wurde gefunden, daß durch die infolge der Einkopplung von Ultraschall zumindest in einem der Polymere und vorzugsweise sowohl in dem die disperse Phase als auch in dem die kontinuierliche Phase bildenden Polymer erzeugten Kavitationsbläschen eine derart homogene Eindispergierung der nicht oder nur schlecht miteinander mischbaren Polymere erreicht werden kann, daß die Bildung von Feinpartikeln aus dem zweiten Polymer mit Abmessungen (in zumindest einer Dimension) von einigen, z.B. etwa 100 bis 1000 µm bis in einen nanoskaligen Bereich von etwa 10 nm möglich ist. Die Bildung von Agglomeraten, wie sie bei dem Einsatz von fertigen Feinpartikeln auftritt, wird ebenso zuverlässig verhindert wie ein rasches Zusammenfließen der feinen Tröpfchen aus dem zweiten Polymer, wie es bei herkömmlichen Mischverfahren mittels Rotor/Stator-Mischeinrichtungen, Kolloidmühlen und dergleichen auftritt. Auch ist gegenüber solchen bekannten Mischverfahren ein höherer Anteil der dispersen Phase gegenüber der kontinuierlichen Phase möglich. Ferner gibt die Erfindung die Möglichkeit der Herstellung von transparenten Polymer-Formteilen, wenn das erste Polymer der kontinuierlichen Phase aus der Gruppe der für sichtbares Licht durchlässigen Polymere gewählt und das zweite Polymer der dispersen Phase mit einer Partikelgröße von kleiner etwa 25 nm bis etwa 250 nm in das erste Polymer eindispergiert wird, so daß die aus der dispersen Phase nach Erstarren bzw. Aushärten erzeugten Nanopartikel für das menschliche Auge nicht in Erscheinung treten. Überdies kann durch die Behandlung mit Ultraschall der kristalline Anteil in den Polymerphasen erhöht oder auch die mengenmäßige Verteilung der kristallinen Phasen der beteiligten Polymere verändert werden, wodurch z.B. die Barriereeigenschaften des fertigen Formteils gegen ein Eindringen von Gasen verbessert werden können.

Mit "wenigstens einem" ersten bzw. zweiten Polymer(system) im Sinne der Erfindung sind im übrigen jeweils reine oder Copolymere, Polymermischungen, Polymer-Blends oder Polymerlösungen sowie auch entsprechende Vorprodukte möglicher Polymere in Form von Mono-, Di- und/oder Oligomeren einschließlich flüssiger oder viskoser Harze angesprochen, welche nicht oder nur schlecht miteinander mischbar sind. Selbstverständlich können diesen in an sich bekannter Weise Additive sowie partikuläre und/oder faserförmige Füll- oder Verstärkungsstoffe zugesetzt werden.

Mit "Ultraschall" im Sinne der Erfindung sind Schallwellen mit einer Frequenz oberhalb des menschlichen Hörbereiches, d.h. oberhalb etwa 16 kHz, bis in den Bereich des Hyperschalls, also oberhalb etwa 10⁹ Hz, gemeint.

In bevorzugter Ausführung ist vorgesehen, daß bei der Beaufschlagung mit Ultraschall ein Druck von höchstens etwa 20 bar, insbesondere von höchstens etwa 10 bar, eingestellt wird, da bei Drucken oberhalb der genannten Bereiche die Effekte der Kavitation infolge Ultraschall, d.h. die Entstehung von Kavitationsbläschen, rapide abnehmen und sich überraschenderweise gezeigt hat, daß eine sehr feindisperse Polymermischung insbesondere bei einem verhältnismäßig geringen Druck während der Ultraschallbehandlung, welcher zur Erzeugung einer Vielzahl an Kavitationsbläschen günstig ist, erhalten werden kann. Besonders bevorzugte Druckbereiche liegen in der Regel noch niedriger, insbesondere bei höchstens etwa 5 bar, vorzugsweise bei höchstens etwa 2 bar oder bei höchstens etwa 1,5 bar, wobei sich in vielen Fällen geringe Drucke von höchstens 1 bar, z.B. von etwa 10 mbar bis etwa 1 bar, als vorteilhaft erwiesen haben. Selbstverständlich ist es indes je nach Anwendungsfall auch möglich, demgegenüber höhere Drucke einzustellen, sei es z.B. im Falle eines relativ geringen Anteils an dem zweiten (dispersen) Polymer oder sei es im Falle einer Einkopplung von einer entsprechend höheren Ultraschallenergie, die auch bei höheren Drucken für eine ausreichende Erzeugung von Kavitationsbläschen in der plastifizierten oder flüssigen Polymerdispersion sorgt.

Die Erfindung gibt die Möglichkeit, daß das die kontinuierliche Phase bildende, wenigstens eine erste Polymer sowie auch das die disperse Phase bildende, wenigstens eine zweite Polymer aus der Gruppe der thermoplastischen, thermoelastischen, elastischen und/oder duroplastischen Polymere, Polymer-Blends, Polymermischungen und Polymerlösungen solcher Polymere gewählt wird, so daß Polymer-Formteile aus Systemen aus praktisch beliebigen, nicht oder nur schlecht miteinander mischbaren Polymeren erzeugt werden können. Dabei muß lediglich dafür Sorge getragen werden, daß zumindest während der Einkopplung von Ultraschall in die Dispersion beide Polymere noch nicht (gänzlich) erstarrt bzw. ausgehärtet worden sind, also noch im plastifizierten bzw. flüssigen Zustand vorliegen. Im Falle von aushärtbaren bzw. vernetzbaren Polymeren, wie Duroplasten oder Elastomeren, kann die Aushärtung der kontinuierlichen und/oder der dispersen Phase sodann gegebenenfalls durch Bestrahlung, z.B. mit hochfrequenter elektromagnetischer Strahlung, mit Teilchenstrahlung etc., oder auf beliebige andere bekannte Weise initiiert oder beschleunigt werden, während im Falle von schmelzbaren, thermoplastischen oder thermoelastischen Polymeren insbesondere eine Kühlung vorgesehen sein kann. Im Falle einer Kombination von einerseits thermoplastischen oder thermoelastischen Polymeren, andererseits duroplastischen oder elastischen Polymeren können die genannten Vorgehensweisen auch kumulativ erfolgen, d.h. es wird sowohl bestrahlt als auch abgekühlt, um beide Phasen zu erstarren.

Die Erfindung gibt ferner die Möglichkeit, daß das die kontinuierliche Phase bildende, wenigstens eine erste Polymer sowie auch das die disperse Phase bildende, wenigstens eine zweite Polymer aus der Gruppe der synthetischen Polymere, Polymer-Blends, Polymermischungen und/oder Polymerlösungen solcher Polymere, der natürlichen Polymere, Polymer-Blends, Polymermischungen und/oder Polymerlösungen solcher Polymere oder Polymer-Blends, Polymermischungen und/oder Polymerlösungen aus synthetischen und natürlichen Polymeren gewählt wird. Als Vertreter natürlicher bzw. sogenannter Biopolymere seien beispielhaft Proteine, wie Gelatine, Polysaccharide, Pektin, Stärke, Cellulose etc., Lignin, sogenannter Papierbrei und dergleichen genannt.

In jedem Fall lassen sich nicht oder nur schlecht mischbare Polymere miteinander kombinieren, wobei insbesondere relativ harte und demgegenüber weichere thermoplastische oder thermoelastische Polymere oder z.B. ein kontinuierliches thermoplastisches Polymer mit z.B. einem dispersen elastischen Polymer ("weiche" disperse Phase in "harter" kontinuierlicher Phase, z.B. zur Erhöhung der Schlagzähigkeit bzw. Duktilität) oder z.B. ein kontinuierliches thermoplastisches oder thermoelastisches Polymer mit z.B. einem dispersen duroplastischen Polymer ("harte" disperse Phase in "weicher" kontinuierlicher Phase) oder umgekehrt kombiniert werden können, um die Werkstoffeigenschaften eines hieraus erzeugten Polymer-Formteils in der jeweils gewünschten Weise zu modifizieren. Lediglich als Beispiele von Kombinationen nicht oder nur schlecht miteinander mischbarer Polymere, welche sich mittels des erfindungsgemäßen Verfahrens zu einwandfreien Polymer-Formteilen verarbeiten lassen, seien Acrylnitril-Butadien-Styrol-Polymere (ABS) mit Polyethylen (PE; LD oder HD); ABS mit Polyoxymethylen (POM); ABS mit Polypropylen (PP); ABS mit Polystyrol (PS); ABS mit thermoplastischen Polyurethanelastomeren (TPU); Ethylen-Vinylacetat-Polymere (EVA) mit Polyvinylchlorid (PVC); Polyamide (PA), z.B. PA6 oder PA66 (Hexamethylendiamin/Adipinsäure), mit PE, POM, PP oder PS; Polycarbonat (PC) mit PA66, PE, POM, PP oder PS; PE mit Polymethylmethacrylat (PMMA), POM, PP, PS, TPU, PVC, Styrol-Acrylnitril-Polymeren (SAN), Polyethylenterephthalat (PET) oder PC/ABS-Blends; PMMA mit PP, PS oder PET, POM mit PP, PS, SAN, PET oder PC/ABS-Blends; PP mit PS, TPU, PVC, SAN oder PC/ABS-Blends, PS mit TPU, PVC, SAN, PET, PC/ABS-Blends etc. genannt.

Während das erfindungsgemäße Verfahren grundsätzlich auch diskontinuierlich bzw. batchweise durchgeführt werden kann, z.B. durch die vorstehend beschriebene Einkopplung von Ultraschall in ein geeignetes Formwerkzeug, in eine Presse, Mischeinrichtung, z.B. in Form eines Rührkesselreaktors oder dergleichen, welche(s) vorzugsweise mit einer Einrichtung zur Steuerung des Druckes ausgestattet sein kann und in welche(s) die nicht oder nur schlecht miteinander mischbaren Polymere im plastifizierten oder flüssigen Zustand eingebracht worden sind, sieht eine andere bevorzugte Ausführungsform vor, daß das wenigstens eine erste und das wenigstens eine zweite Polymer in einer Plastifiziereinheit, insbesondere in Form eines Extruders, zusammengebracht und in dieser unter Bildung der Dispersion mit Ultraschall beaufschlagt werden. Zumindest das die disperse Phase bildende, zweite Polymer sollte nach der Ultraschallbehandlung möglichst schnell erstarrt werden, um ein Zusammenfließen der noch flüssigen Tröpfchen weitestgehend zu verhindern. Das zweite Polymer kann dabei entweder bereits in der Plastifiziereinheit oder - wie auch das erste, die kontinuierliche Phase bildende Polymer - nach Ausbringen aus derselben erstarrt werden. Im Falle des Einsatzes von thermoplastisch verarbeitbaren, thermoplastischen oder thermoelastischen Polymeren können diese der Plastifiziereinheit selbstverständlich auch in fester, z.B. pulver- oder granulatartiger Form zugesetzt und dort vor oder spätestens bei der Einkopplung von Ultraschall in den plastischen bzw. schmelzflüssigen Zustand überführt werden. Dabei kann vor der Ultraschallbehandlung eine gewisse Vordispergierung der plastifizierten oder flüssigen Polymere infolge der Förderung mittels einer oder mehrerer Extruderschnecken in Richtung einer Düse durchgeführt werden. Alternativ oder zusätzlich ist es natürlich auch denkbar, daß die z.B. granulatförmig eingesetzten Polymere vor der Zugabe in einen Extruder mittels eines externen Mischsystems, z.B. eines Taumelmischers, vorgemischt werden. Die Einkopplung von Ultraschall erfolgt dann vorzugsweise im Bereich der Extruderdüse, z.B. in einer stromauf der Düse angeordneten Durchflußzelle, welche mit einer oder mehreren, Ultraschall aussendenden Sonotroden ausgestattet ist.

Dabei kann es hinsichtlich einer weiter oben erläuterten Erniedrigung des Druckes anläßlich dem Beaufschlagen mit Ultraschall gegenüber der Homogenisierung/Plastifizierung der Polymermischung in der Plastifiziereinheit günstig sein, wenn das erste und das zweite Polymer bei Beaufschlagen mit Ultraschall durch einen Bereich der Plastifiziereinheit mit erweitertem Querschnitt gefördert werden, so daß im Bereich der Einkopplung von Ultraschall sowohl der Druck in der Dispersion als auch die dort infolge der Förderung auftretenden Druck- bzw. Normalspannungen möglichst gering gehalten werden, um die Effekte der infolge Kavitation erzeugten Kavitationsbläschen zu verstärken. Sofern zumindest das die kontinuierliche Phase bildende, erste Polymer von einem schmelzbaren, thermoplastischen oder thermoelastischen Polymer gebildet ist, kann das fertige Formteil im übrigen unmittelbar durch Extrudieren hergestellt werden, oder das Extrudat wird zu granulatartigen Formteilen zerteilt, welche wiederum, z.B. durch Extrudieren, Spritzgießen oder dergleichen, weiterverarbeitet werden können. Ebenfalls ist es selbstverständlich denkbar, daß die Dispersion aus der Plastifiziereinheit in eine dieser nachgeordnete Spritzgießeinheit überführt und dort erstarrt wird.

Alternativ oder zusätzlich kann es im Hinblick auf die Erniedrigung des Druckes anläßlich dem Beaufschlagen der Polymere mit Ultraschall günstig sein, wenn das erste und das zweite Polymer bei Beaufschlagen mit Ultraschall zur Einstellung eines erniedrigten Druckes über eine Schmelzedichtung der Plastifiziereinheit gefördert werden. Mit "Schmelzedichtung" ist in diesem Zusammenhang gemeint, daß die Polymere in der Plastifiziereinheit über einen Bereich der Plastifiziereinheit mit erhöhtem Widerstand in Förderrichtung gefördert werden, wobei dieser Bereich z.B. von einem Abschnitt der Förderschnecke der Plastifiziereinheit oder des Extruders mit einem Gewinde geringerer Ganghöhe oder gar mit einem zur Förderrichtung gegenläufigen Schneckengewinde gebildet sein kann. Dies führt zu einem Druckabfall stromab dieses Abschnittes, welcher für die Ultraschallbehandlung genutzt werden kann.

Sowohl eine Querschnittserweiterung der Plastifiziereinheit als auch eine Schmelzedichtung der Plastifiziereinheit kann folglich allein oder in Kombination insbesondere dazu dienen, den Druck der Polymere anläßlich der Beaufschlagung mit Ultraschall gegenüber dem Mischen/Plastifizieren/Homogenisieren in der Plastifiziereinheit abzusenken, wie es erfindungsgemäß von Vorteil sein kann und wie es selbstverständlich auch im Falle einer diskontinuierlichen Verfahrensführung, z.B. mittels eines drucksteuerbaren Rührkessels, möglich ist.

Des weiteren kann es von Vorteil sein, wenn die Dispersion im noch flüssigen oder plastifizierten Zustand zumindest des die kontinuierliche Phase bildenden ersten Polymers - vor (bzw. stromauf), während oder insbesondere nach (bzw. stromab) der Beaufschlagung mit Ultraschall - wenigstens teilweise entgast wird. Die Entgasung kann durch in der Wandung und/oder in einer Fördereinrichtung, wie einer Extruderschnecke, der Plastifiziereinheit vorgesehene Ventile, Öffnungen, poröse Einsätze, wie Sintermetalleinsätze, oder dergleichen geschehen, um gegebenenfalls in den Polymeren vorhandene und infolge der Ultraschallbehandlung nicht mehr gelöste Gase, welche zu Hohlräumen und Rißbildungen in dem fertigen Formteil führen können, zu entfernen. Wie bereits angesprochen, kann es unter Umständen je nach der gewählten Kombination der Polymere auch günstig sein, durch Nicht-Entgasen oder gar Zufuhr gasförmiger Medien die Bildung von Kavitationsbläschen zur Erzeugung einer feindispersen Phase zu unterstützen oder auch für eine gezielte Bläschenbildung zur Herstellung von Polymerschäumen zu sorgen und die Polymerdispersion gegebenenfalls nach (stromab) der Ultraschallbehandlung zu entgasen.

In weiterhin bevorzugter Ausführung kann vorgesehen sein, daß dem wenigstens einen ersten und/oder dem wenigstens einen zweiten Polymer wenigstens ein Additiv zugesetzt wird, wobei vorzugsweise ein in zumindest einem der Polymere im plastifizierten oder flüssigen Zustand zumindest teilweise lösliches Additiv eingesetzt und letzteres in dem Polymer zumindest teilweise gelöst wird, um die Eigenschaften der kontinuierlichen Phase und/oder der dispersen Phase in vorteilhafter Weise zu beeinflussen.

In diesem Zusammenhang ist es zweckmäßig, ein bei den während der Beaufschlagung mit Ultraschall herrschenden Bedingungen gasförmiges oder in den gasförmigen Zustand überführbares Additiv zuzusetzen, so daß bei der Einkopplung von Ultraschall die Bildung von Kavitationsbläschen begünstigt wird bzw. die beim Kollabieren der Kavitationsbläschen frei werdende Energie gesteuert werden kann. Nach der Ultraschallbehandlung kann dann z.B. eine oben erwähnte Entgasung der noch plastifzierten bzw. flüssigen Dispersion vorgenommen werden.

Alternativ oder zusätzlich kann es vorteilhaft sein, ein die Oberflächenspannung wenigstens eines der Polymere zumindest bei den während der Beaufschlagung mit Ultraschall herrschenden Bedingungen modifizierendes, insbesondere verringerndes, Additiv, wie oberflächenaktive Substanzen, z.B. Emulgatoren, Haftvermittler, Tenside oder dergleichen, zuzusetzen, um die disperse Phase des zweiten Polymers möglichst fein verteilt in die kontinuierliche Phase des ersten Polymers einzudispergieren und einem Zusammenfließen der feinen Tröpfchen der dispersen Phase entgegenzuwirken.

Ferner können weitere Additive zugesetzt werden, z.B. solche, die zur Beeinflussung, insbesondere zur Verringerung, des Dampfdruckes wenigstens eines der Polymere zumindest bei den während der Beaufschlagung mit Ultraschall herrschenden Bedingungen in der Lage sind, was insbesondere dann von Vorteil sein kann, wenn zu Duroplasten oder Elastomeren vernetzende, niedrig siedende Mono-, Di- oder Oligomere oder auch in z.B. wäßrigen Lösungen vorliegende Biopolymere eingesetzt werden.

Überdies kann es alternativ oder zusätzlich günstig sein, daß ein die Viskosität wenigstens eines der Polymere zumindest bei den während der Beaufschlagung mit Ultraschall herrschenden Bedingungen modifizierendes, insbesondere verringerndes, Additiv, z.B. Gleitmittel oder dergleichen, zugesetzt wird, um z.B. den zur Förderung der plastifizierten oder flüssigen Polymere in Richtung einer Extruderdüse erforderlichen Druck bei der Einkopplung von Ultraschall möglichst gering zu halten.

Die Frequenz bzw. die Amplitude des eingesetzten Ultraschalls richtet sich ebenso wie die Temperatur, z.B. bis etwa 400°C, und der Druck bei der Ultraschalleinkopplung vornehmlich nach dem jeweiligen Stoffsystem des ersten und zweiten Polymers (bzw. Polymer-Blend, Polymermischung, Polymerlösung etc.). Entsprechendes gilt für die Leistung des Ultraschalls, wobei es in vielen Fällen zweckmäßig ist, daß Ultraschall mit einer Leistung von 0,1 bis 1000 W/cm², insbesondere von 1 bis 500 W/cm², eingesetzt wird.

Um die infolge Kavitation während der Einkopplung von Ultraschall erzeugte feine Dispersion der noch plastifizierten oder flüssigen Polymere in dem fertigen Polymer-Formteil aufrechtzuerhalten bzw. "einzufrieren" und ein Zusammenfließen der dispersen Phase des zweiten Polymers möglichst zu verhindern, kann vornehmlich dann, wenn als erstes und/oder zweites Polymer schmelzbare, thermoplastische und/oder thermoelastische Polymere einschließlich solcher Polymerlösungen eingesetzt werden, in bevorzugter Ausführung vorgesehen sein, daß die Dispersion - insbesondere unmittelbar - nach der Beaufschlagung mit Ultraschall mit einem Medium mit einer gegenüber Luft höheren Wärmekapazität unter Bildung des Polymer-Formteils abgekühlt wird. Wird eine Plastifiziereinheit, z.B. in Form eines Extruders, eingesetzt, so geschieht dies zweckmäßig unmittelbar nach Ausbringen der Dispersion aus der Plastifiziereinheit. Es sei an dieser Stelle darauf hingewiesen, daß z.B. im Falle des Einsatzes eines Extruders oder einer Strangpresse der erzeugte und abgekühlte Strang auch granuliert und das Granulat weiterverarbeitet werden kann, wobei mit "Polymer-Formteil" im Sinne der Erfindung auch solche Granulate wie auch Halbzeuge oder Endlosstränge umfaßt sind. Zur schnellen Abkühlung der sich noch im plastischen Zustand befindlichen Dispersion kann beispielsweise vorgesehen sein, daß die Dispersion in einem Wasserbad abgekühlt wird.

Wird zumindest ein aushärtbares bzw. vernetzbares, duroplastisches oder elastisches Polymer einschließlich solcher Polymerlösungen eingesetzt, so kann, wie bereits angedeutet, zu demselben Zweck alternativ (im Falle zweier solcher Polymere) oder zusätzlich (im Falle eines solchen Polymers in Verbindung mit einem erstarrenden thermoplastischen und/oder thermoelastischen Polymer) vorgesehen sein, daß die Dispersion - insbesondere unmittelbar - nach der Beaufschlagung mit Ultraschall durch Bestrahlung ausgehärtet wird. Für eine solche Initiierung oder Beschleunigung der Aushärtung kann je nach eingesetztem Polymer zweckmäßig elektromagnetische Strahlung, insbesondere im Infrarotbereich (IR), im ultravioletten Bereich (UV) und/oder im Mikrowellenbereich (MW), gegebenenfalls auch z.B. im Röntgenbereich (γ-Strahlung), oder Teilchenstrahlung, insbesondere Elektronenstrahlung (β-Strahlung), gegebenenfalls auch z.B. Ionenstrahlung, wie α-Strahlung, eingesetzt werden. Im Falle eines thermoplastischen bzw. thermoelastischen Polymers in der einen Phase und eines duroplastischen bzw. elastischen Polymers in der anderen Phase können beide Verfahren auch miteinander kombiniert werden, d.h. es kann z.B. sowohl gekühlt als auch bestrahlt werden. Werden ausschließlich aushärtende bzw. vernetzende Polymere eingesetzt, so kann selbstverständlich auch eine Erwärmung der Dispersion auf einen materialspezifischen Wert vorgesehen sein, um die Vernetzung zu initiieren bzw. zu beschleunigen.

Nachstehend ist die Erfindung anhand von Ausführungsbeispielen unter Bezugnahme auf die Zeichnung näher erläutert. Dabei zeigen:

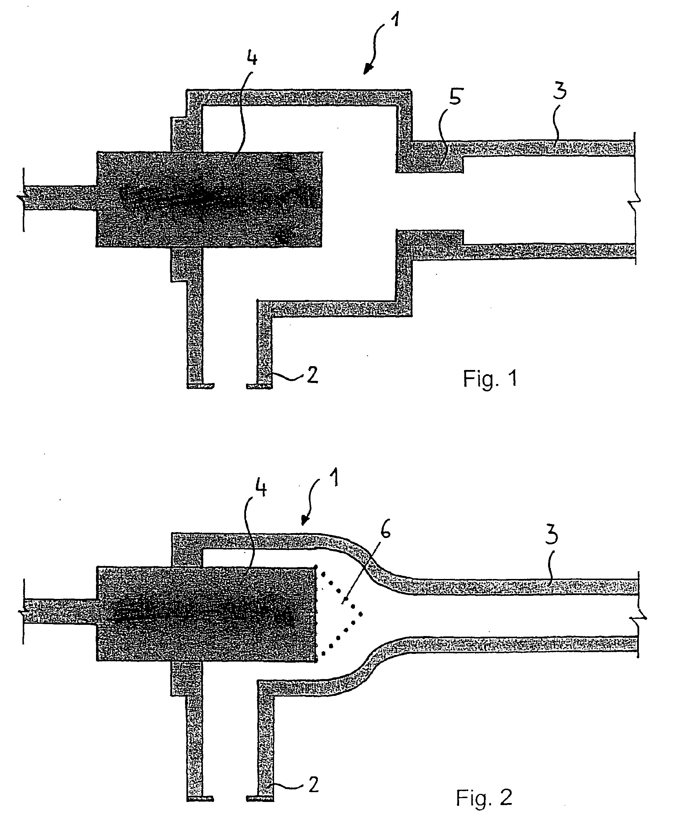

- Fig. 1 bis 4: jeweils eine schematische Schnittansicht verschiedener Ausführungsformen einer mit einer Einrichtung zur Erzeugung von Ultraschall ausgestatteten Durchflußzelle einer Plastifiziereinheit.

Die in Fig. 1 schematisch dargestellte Durchflußzelle 1 einer im übrigen nicht näher wiedergegebenen Plastifiziereinheit, z.B. in Form eines Schnecken- oder Kolbenextruders, ist unmittelbar stromauf einer Extruderdüse 2 an dem Endabschnitt 3 des Extruders angeordnet, z.B. an diesen angeflanscht. Die Extruderdüse 2 kann gegenüber dem Endabschnitt 3 des Extruders drehbar angeordnet sein, um die sich beim vorliegenden Ausführungsbeispiel im wesentlichen senkrecht zur Förderrichtung in dem Extruder erstreckende Austrittsöffnung der Extruderdüse 2 schwenken zu können. Die Düse 2 kann ferner einen variablen Querschnitt besitzen, um den Druck in der Durchflußzelle 1 ändern zu können, wobei er aus den weiter oben genannten Gründen vorzugsweise stets unterhalb etwa 20 bar, insbesondere unterhalb etwa 15 bar oder tiefer, gehalten werden sollte. Dies kann beispielsweise mittels geeigneter Blenden, Lochscheiben oder dergleichen mit veränderbarem Durchmesser und/oder mit veränderbarer Länge in Durchströmrichtung geschehen, welche in die Austrittsöffnung der Düse 2 einsetzbar sind. Bei dem Extruder kann es sich um einen herkömmlichen, mit der Durchflußzelle 1 nachgerüsteten Extruder handeln.

In der Durchflußzelle 1 ist eine sich beim vorliegenden Ausführungsbeispiel etwa parallel zur Förderrichtung in dem Extruder in die Zelle 1 hinein erstreckende Sonotrode 4 angeordnet, welche zur Erzeugung von Ultraschallschwingungen dient. In der Durchflußzelle 1 sind ferner vorzugsweise Sensoren (nicht gezeigt) angeordnet, um verschiedene Prozeßparameter, wie Druck, Temperatur, elektrische und/oder thermische Leitfähigkeit, Viskosität und/oder Molmasse des plastifizierten oder flüssigen ersten und/oder zweiten Polymers sowie Leistung (eingestellte Bruttoleistung sowie in die Dispersion eingekoppelte Nettoleistung), Wellenlänge, Amplitude, Schallgeschwindigkeit und/oder Dämpfung des von der Sonotrode 4 - oder einer Meßsonotrode (nicht dargestellt) - ausgesandten Ultraschalls erfassen zu können. Die Sonotrode 4 selbst ist bei dem Ausführungsbeispiel gemäß Fig. 1 im wesentlichen kreiszylindrisch ausgebildet, wobei der Gesamtquerschnitt des zwischen der Sonotrode 4 und der Wandung der Durchflußzelle 1 gebildeten Ringraumes geringfügig größer ist als der Querschnitt des Endabschnittes 3 des Extruders, um für einen demgegenüber verminderten Druck in der mit Ultraschall beaufschlagbaren Durchflußzelle 1 zu sorgen, was wiederum für die Bildung von Kavitationsbläschen günstig ist. Im Übergangsbereich des Endabschnittes 3 und der Durchflußzelle 1 kann zusätzlich eine Querschnittsverengung 5 vorgesehen sein.

Das in Fig. 2 wiedergegebene Ausführungsbeispiel einer Durchflußzelle 1 unterscheidet sich von dem gemäß Fig. 1 vornehmlich dadurch, daß die Sonotrode 4 an ihrer Stirnseite mit einem spitz zulaufenden, z.B. etwa kegelförmigen Fortsatz ausgestattet ist, welcher durch die Punktlinie 6 angedeutet ist. Auf diese Weise ergibt sich ein kontinuierlicherer Übergang zwischen dem Endabschnitt 3 des Extruders und der Durchflußzelle 1, welcher zur Verminderung von Normal- und Druckspannungen in der durch die Durchflußzelle 1 hindurch geförderten Polymerdispersion in der Lage ist, um die Bildung von Kavitationsbläschen und folglich die Energiefreisetzung beim Kollabieren derselben zu begünstigen.

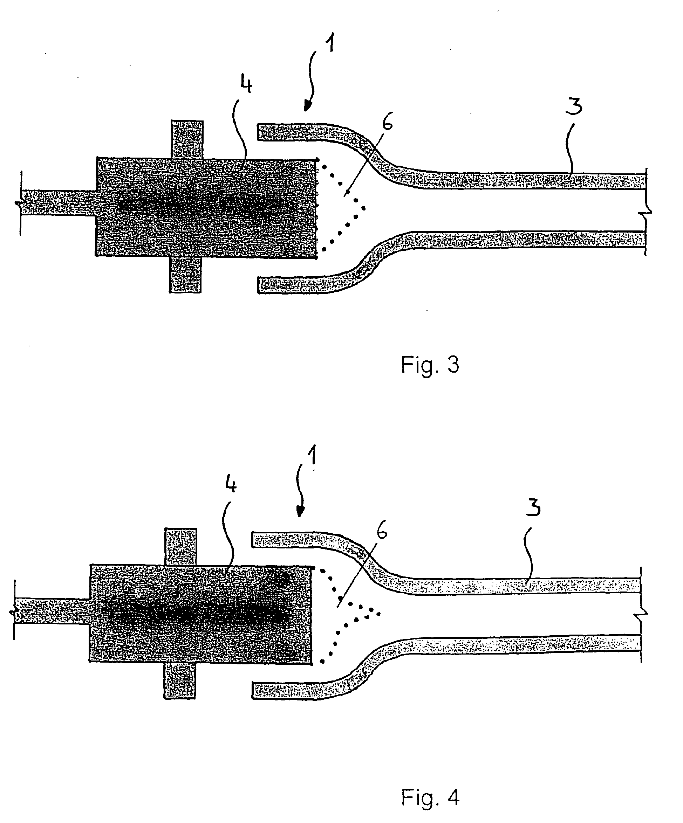

Entsprechendes gilt für das in Fig. 3 gezeigte Ausführungsbeispiel, wobei dort die Durchflußzelle 1 ringförmig offen ausgebildet ist, so daß das Plastifikat über den gesamten Umfang der Sonotrode 4 aus der Durchflußzelle 1 austritt. Durch eine solche Ausgestaltung kann es möglich sein, den Druck in der Durchflußzelle 1 noch weiter abzusenken.

Das in Fig. 4 dargestellte Ausführungsbeispiel einer Durchflußzelle 1 unterscheidet sich von dem gemäß Fig. 3 insbesondere dadurch, daß der stirnseitige Fortsatz 6 der Sonotrode 4 mit einer noch besser an den sich kontinuierlich erweiternden Querschnitt des Übergangs zwischen Endabschnitt 3 des Extruder und Durchflußzelle 1 angepaßten Außenkontur ausgestattet ist, um die Druck- und Normalspannungen in der geförderten und mittels der Sonotrode 4 mit Ultraschall beaufschlagten Polymerdispersion so gering wie möglich zu halten und gegebenenfalls auch Zugspannungen in der Dispersion lokal zu induzieren. Eine entsprechende Form der Sonotrode 4 ist selbstverständlich auch bei einem geschlossenen Gehäuse, wie es in Fig. 1 und 2 schematisch wiedergegeben ist, denkbar.

### Ausführungsbeispiel 1

Mittels eine Extruders, z.B. eines Schneckenextruders mit einer oder mehreren Förderschnecken, mit einer z.B. gemäß Fig. 1 bis 4 ausgestalteten Durchflußzelle 1 wird ein Polymer-Formteil aus einem ersten thermoplastischen Polymer und einem praktisch nicht mit diesem mischbaren zweiten thermoplastischen Polymer mit einem demgegenüber geringeren Reibungskoeffizient hergestellt. Hierzu werden das erste und zweite, z.B. jeweils granulatförmige Polymer dem Extruder aufgegeben und dort in den plastischen Zustand überführt. Die beidem Polymerschmelzen werden durch Rotieren der Extruderschnecke vordispergiert und durch die Durchflußzelle 1 hindurch gefördert und dort z.B. bei einer Temperatur von etwa 200°C und einem Druck von etwa 800 mbar mittels des Sonotrode 4 mit Ultraschall beaufschlagt. Dabei werden Kavitationsbläschen erzeugt, so daß das zweite Polymer feindispers in das erste Polymer eindispergiert wird. Zusätzlich kann ein vorzugsweise in zumindest einem der Polymere lösbares Additiv zugesetzt werden, welches insbesondere bei den in der Durchflußzelle 1 herrschenden Bedingungen gasförmig vorliegt und seinerseits zur Bildung von Kavitationsbläschen beiträgt. Die Polymerdispersion mit dem feindispers in dem ersten Polymer verteilten zweiten Polymer wird anschließend über die Extruderdüse 2 ausgebracht und mittels Durchleiten durch ein Wasserbad hinreichend schnell zu dem Polymer-Formteil abgekühlt, um ein Zusammenfließen der dispersen Phase weitestgehend zu verhindern. Die Teilchengröße der dabei erzeugten Feinpartikel aus dem dispersen zweiten Polymer kann durch entsprechende Steuerung der Leistung, Frequenz, Amplitude und/oder Einwirkungsdauer (bzw. Volumenstrom im Falle der Strömung durch die Durchflußzelle 1) des Ultraschalls bis auf wenige Nanometer eingestellt werden. Das fertige Polymer-Formteil besitzt einen gegenüber dem ersten Polymer erheblich verminderten Reibungskoeffizient und eignet sich beispielsweise als konstruktives Bauteil für Lagerelemente und Gleitflächen.

### Ausführungsbeispiel 2

Bei einem Verfahren gemäß Beispiel 1 wird als erstes - relativ hartes - Polymer Polystyrol (PS) und als zweites - demgegenüber weicheres - Polymer ein thermoplastisches Polyurethanelastomer (TPU) eingesetzt, um der PS-Matrix eine erhöhte Schlagzähigkeit bzw. Duktilität zu verleihen.

### Ausführungsbeispiel 3

Bei einem Verfahren gemäß Beispiel 1 wird als erstes Polymer ein transparentes Polymer eingesetzt, wobei das zweite Polymer so feindispers mittels Ultraschall in das erste Polymer eindispergiert wird, daß dieses in einer Partikelgröße im Bereich von etwa 10 nm oder 20 nm bis zu etwa 200 nm oder 300 nm vorliegt, ohne die Transparenz des ersten Polymers nennenswert zu verringern.

### Ausführungsbeispiel 4

Zur Herstellung von Polymer-Formkörpern in Form von Tabletten, insbesondere zum Einsatz im Bereich der Pharmazie, werden als erstes und zweites Polymer jeweils eine z.B. wäßrige Polymerlösung oder -suspension aus einem physiologisch verträglichen und z.B. biologisch abbaubaren Polymer eingesetzt. Hierbei wird in das zweite Polymer, z.B. Gelatine, ein pharmazeutischer Wirkstoff eindispergiert, welcher aus dem Polymer retardiert freisetzbar ist. Der Dispergiervorgang geschieht mittels Ultraschall, so daß in dem zweiten Polymer Kavitationsbläschen erzeugt werden und der pharmazeutische Wirkstoff nach Kollabieren der Bläschen in den zurückbleibenden Hohlräumen aufgenommen wird. Das derart vorbehandelte zweite Polymer (Gelatine/Wirkstoff) wird nun mit dem ersten Polymer, z.B. Stärke, zusammengebracht, indem die beiden Lösungen (oder Suspensionen) einem Extruder aufgegeben und bei einer von den jeweiligen Stoffsystemen abhängigen Temperatur sowie bei einem Druck von z.B. etwa 1 bar derart mit Ultraschall beaufschlagt werden, daß Kavitationsbläschen erzeugt werden. Die erhaltene Dispersion kann zur Entfernung des Lösungsmittels (Wasser) unmittelbar vor Austritt aus dem Extruder entgast werden, um den Feuchtegehalt zu reduzieren und hierdurch auf eine erhöhte Formstabilität, Viskosität und/oder physikalische/mikrobielle Stabilität hinzuwirken. Das formstabile Extrudat, welches den pharmazeutischen Wirkstoff in feindisperser Verteilung in dem viskosen zweiten Polymer (Gelatine) und dieses wiederum in der formstabilen Matrix aus dem zweiten Polymer (Stärke) enthält, wird nach Abkühlen zu Tabletten verarbeitet, aus welchen der Wirkstoff über einen längeren Zeitraum hinweg retardiert freigesetzt wird. Beide Polymer(system)e können selbstverständlich Additive und/oder weitere fluide Stoffe, wie Alkohole, Gase, Fette, Öle (z.B. Silikonöle), Glycerin etc., enthalten. Entsprechend ist eine Herstellung von anderen pharmazeutischen Artikeln, wie z.B. Zäpfchen, oder auch von Zwischen- oder Endprodukten im Bereich der Lebensmittel, Nahrungsmittelergänzungsstoffe und dergleichen denkbar.

### Ausführungsbeispiel 5

Zur Herstellung von Wirkstoffe enthaltenden Polymer-Formteilen, z.B. Einlegesohlen, wird ein erstes Polymer, z.B. ein thermoplastisches Elastomer, wie TPU, plastifiziert und unter Einwirkung von Ultraschall mit einem fluiden Wirkstoff in Form eines schweißmindernden Mittels versetzt. Als mögliche schweißmindernde Mittel seien beispielhaft wäßrige Lösungen von Aluminiumsalzen, wie Aluminiumchlorid (AlCl₃), Botulinumtoxin-A etc. erwähnt. Der Dispergiervorgang des Mittels in das plastifizierten TPU geschieht mittels Ultraschall, so daß in dem ersten Polymer Kavitationsbläschen erzeugt werden und das Mittel nach Kollabieren der Bläschen in den zurückbleibenden Hohlräumen aufgenommen wird. Das derart vorbehandelte erste Polymer (TPU/Wirkstoff) wird nun mit einem zweiten Polymer mit demgegenüber höherer Festigkeit, z.B. einem thermoplastischen Polyolefin, wie PE, PP oder dergleichen, zusammengebracht, indem die beiden Polymere einem Extruder aufgegeben, gegebenenfalls mit geeigneten Additiven versetzt und z.B. bei einem Druck von etwa 1 bar derart mit Ultraschall beaufschlagt werden, daß Kavitationsbläschen erzeugt werden. Die erhaltene Dispersion wird über eine Düse aus dem Extruder ausgebracht und in eine geeignete Form überführt (z.B. in Kombination mit Spritzguß), in welcher sie durch äußere Kühlung schnell abgekühlt und zu dem Formteil erstarrt wird. Die fertige Einlegesohle, welche sowohl den Wirkstoff als auch das zweite Polymer (z.B. PE, PP etc.) in feindisperser Verteilung in dem elastischen ersten Polymer (TPU) enthält, weist eine gegenüber reinem TPU deutlich erhöhte Festigkeit und Dauerhaftigkeit auf.

## Patentansprüche

1. Verfahren zur Herstellung eines Polymer-Formteils aus wenigstens einem ersten Polymer oder Polymersystem und wenigstens einem mit dem ersten Polymer nicht oder nur schlecht mischbaren zweiten Polymer oder Polymersystem, wobei das zweite Polymer in Form einer feinpartikulären dispersen Phase in der kontinuierlichen Phase des ersten Polymers vorliegt, **gekennzeichnet durch** die folgenden Schritte:
- Zusammenbringen des ersten Polymers in flüssigem, plastifiziertem oder gelöstem Zustand mit dem zweiten Polymer in flüssigem, plastifiziertem oder gelöstem Zustand;
- feindisperses Eindispergieren des zweiten Polymers in das erste Polymer **durch** Beaufschlagung mit Ultraschall derart, daß zumindest in einem der Polymere Kavitationsbläschen erzeugt werden; und
- Erstarren der Dispersion zu dem Polymer-Formteil unter Abkühlen oder Aushärten zumindest eines des die kontinuierliche Phase bildenden ersten Polymers und des die disperse Phase bildenden zweiten Polymers, insbesondere unter Abkühlen oder Aushärten sowohl des die kontinuierliche Phase bildenden ersten Polymers als auch des die disperse Phase bildenden zweiten Polymers.

2. Verfahren nach Anspruch 1, **dadurch gekennzeichnet, daß** die Polymere durch Beaufschlagung mit Ultraschall derart ineinander eindispergiert werden, daß sowohl in dem die kontinuierliche Phase bildenden ersten Polymer als auch in dem die disperse Phase bildenden zweiten Polymer Kavitationsbläschen erzeugt werden.

3. Verfahren nach Anspruch 1 oder 2, **dadurch gekennzeichnet, daß** bei der Beaufschlagung mit Ultraschall ein Druck von höchstens 20 bar, insbesondere von höchstens 10 bar, eingestellt wird.

4. Verfahren nach einem der Ansprüche 1 bis 3, **dadurch gekennzeichnet, daß** bei der Beaufschlagung mit Ultraschall ein Druck von höchstens 5 bar, insbesondere von höchstens 2 bar, eingestellt wird.

5. Verfahren nach einem der Ansprüche 1 bis 4, **dadurch gekennzeichnet, daß** bei der Beaufschlagung mit Ultraschall ein Druck von höchstens 1,5 bar, insbesondere höchstens 1 bar, eingestellt wird.

6. Verfahren nach einem der Ansprüche 1 bis 5, **dadurch gekennzeichnet, daß** das wenigstens eine erste und das wenigstens eine zweite Polymer in einer Plastifiziereinheit, insbesondere in Form eines Extruders, zusammengebracht und in dieser unter Bildung der Dispersion mit Ultraschall beaufschlagt werden.

7. Verfahren nach Anspruch 6, **dadurch gekennzeichnet, daß** das erste und das zweite Polymer bei Beaufschlagen mit Ultraschall zur Einstellung eines erniedrigten Druckes durch einen Bereich der Plastifiziereinheit mit erweitertem Querschnitt gefördert werden.

8. Verfahren nach Anspruch 6 oder 7, **dadurch gekennzeichnet, daß** das erste und zweite Polymer bei Beaufschlagen mit Ultraschall zur Einstellung eines erniedrigten Druckes über eine Schmelzedichtung der Plastifiziereinheit gefördert werden.

9. Verfahren nach einem der Ansprüche 6 bis 8, **dadurch gekennzeichnet, daß** die Dispersion aus der Plastifiziereinheit in eine dieser nachgeordnete Spritzgießeinheit überführt wird.

10. Verfahren nach einem der Ansprüche 1 bis 9, **dadurch gekennzeichnet, daß** die Dispersion im noch flüssigen oder plastifizierten Zustand zumindest des die kontinuierliche Phase bildenden ersten Polymers - vor, während und/oder insbesondere nach der Beaufschlagung mit Ultraschall - wenigstens teilweise entgast wird.

11. Verfahren nach einem der Ansprüche 1 bis 10, **dadurch gekennzeichnet, daß** dem ersten und/oder dem zweiten Polymer wenigstens ein Additiv zugesetzt wird/werden.

12. Verfahren nach Anspruch 11, **dadurch gekennzeichnet, daß** ein in zumindest einem der Polymere im plastifizierten oder flüssigen Zustand zumindest teilweise lösliches Additiv eingesetzt und letzteres in dem Polymer zumindest teilweise gelöst wird.

13. Verfahren nach Anspruch 11 oder 12, **dadurch gekennzeichnet, daß** ein bei den während der Beaufschlagung mit Ultraschall herrschenden Bedingungen gasförmiges oder in den gasförmigen Zustand überführbares Additiv zugesetzt wird.

14. Verfahren nach Anspruch 11 oder 12, **dadurch gekennzeichnet, daß** ein die Oberflächenspannung wenigstens eines der Polymere zumindest bei den während der Beaufschlagung mit Ultraschall herrschenden Bedingungen modifizierendes, insbesondere verringerndes, Additiv zugesetzt wird.

15. Verfahren nach Anspruch 11 oder 12, **dadurch gekennzeichnet, daß** ein den Dampfdruck wenigstens eines der Polymere zumindest bei den während der Beaufschlagung mit Ultraschall herrschenden Bedingungen modifizierendes, insbesondere verringerndes, Additiv zugesetzt wird.

16. Verfahren nach Anspruch 11 oder 12, **dadurch gekennzeichnet, daß** ein die Viskosität wenigstens eines der Polymere zumindest bei den während der Beaufschlagung mit Ultraschall herrschenden Bedingungen modifizierendes, insbesondere verringerndes, Additiv zugesetzt wird.

17. Verfahren nach einem der Ansprüche 1 bis 16, **dadurch gekennzeichnet, daß** Ultraschall mit einer Leistung von 0,1 bis 1000 W/cm², insbesondere von 1 bis 500 W/cm², eingesetzt wird.

18. Verfahren nach einem der Ansprüche 1 bis 17, **dadurch gekennzeichnet, daß** die anläßlich der Beaufschlagung mit Ultraschall erzeugte, feindisperse Struktur der Polymerdispersion eingefroren wird.

19. Verfahren nach Anspruch 18, **dadurch gekennzeichnet, daß** wenigstens ein schmelzbares, thermoplastisches oder thermoelastisches Polymer eingesetzt und dieses nach der Beaufschlagung mit Ultraschall mit einem Medium mit einer gegenüber Luft höheren Wärmekapazität unter Bildung des Polymer-Formteils abgekühlt wird.

20. Verfahren nach Anspruch 19, **dadurch gekennzeichnet, daß** die Dispersion in einem Wasserbad abgekühlt wird.

21. Verfahren nach Anspruch 18, **dadurch gekennzeichnet, daß** wenigstens ein aushärtbares, duroplastisches oder elastisches Polymer eingesetzt und dieses nach der Beaufschlagung mit Ultraschall durch Bestrahlung ausgehärtet wird.

22. Verfahren nach Anspruch 21, **dadurch gekennzeichnet, daß** elektromagnetische Strahlung, insbesondere im Infrarotbereich (IR), im ultravioletten Bereich (UV) und/oder im Mikrowellenbereich (MW), eingesetzt wird.

23. Verfahren nach Anspruch 21, **dadurch gekennzeichnet, daß** Teilchenstrahlung, insbesondere Elektronenstrahlung (β-Strahlung), eingesetzt wird.
